# EUROPEAN PATENT APPLICATION

(11) **EP 3 026 792 A1**
(43) Date of publication of application: **01.06.2016**
(21) Application number: 15194325.5
(22) Date of filing: 12.11.2015
(51) Int. Cl.: H02K 1/18

(54) **ASSEMBLY FOR COMPENSATION OF A THERMIC EXPANSION IN AN ELECTRIC MACHINE**

(30) Priority: 14.11.2014 EP 14193300
(71) Applicant: ALSTOM Renewable Technologies, 38100 Grenoble (FR)
(72) Inventor: Deplanque, Sylvain, 68220 Hagenthal le Haut (FR); Betolaza Garcia, Jose-Felix, 48480 Arrigorriaga (ES); Wehbe Spiridon, Michel, 8134 Adliswil (CH); Binder, Susanne, 5430 Wettingen (CH)
(74) Representative: General Electric Technology GmbH

(57) **Abstract**

The present disclosure relates to an assembly for the compensation of thermic expansion in an electric machine. Disclosed is an assembly for the compensation of thermic expansion in an electric machine with a stirrup connected to a support element mounted to a stator frame, the stirrup is suspended to the stator frame at one end and clamped to the keybar at the other end and projects with the support element perpendicular to the keybar, whereas a spring element or a damper element are pressed and reduce width when a gap between the stirrup and the keybar reduces size due to thermic expansion.

## Description

### TECHNICAL FIELD

The present disclosure relates to an assembly for the compensation of thermic expansion in an electric machine and to the use of such an assembly.

The electric machine is in particular a rotating electric machine such as a synchronous generator to be connected to a hydro turbine (hydro generator). Further, the electric machine can be a generator driven by a shaft rotated by means of a rotor by wind power.

### BACKGROUND

When installing an electric machine the parts are commonly at a temperature which is different to the higher operation temperature. The high operation temperature leads to changes in the provided materials. The materials from metal will expand, known as the phenomenon of thermic expansion. In particular, in this disclosure the thermic expansion of the stator core of an electric machine is described, especially when the stator frame has a rigid design. A rigid design is a design with stiff parts which does not allow an expansion of parts. The thermic expansion of the stator core must be considered as the stator core is built from stacked sheets which can undulate. This phenomenon is known as buckling in the technical field. During the thermic expansion the mechanical contact between the stator core and the stator frame needs to be maintained. With the term keybar in this disclosure an elongated wedge from metal is defined which supports the stator core and is connected to the stator frame by a stirrup. The keybar projects along the outer face of the stator core whereas several keybars are arranged at the stator core.

### SUMMARY

It is an object of the invention to provide a solution for the thermic expansion of a stator core in an electric machine.

This object is solved with the features of an assembly according to the independent claim 1 and the use of an assembly according to claim 12.

Further examples of the invention are disclosed in the dependent claims.

### BRIEF DESCRIPTION OF THE DRAWINGS

Further characteristics and advantages will be more apparent from the description of a preferred but non-exclusive embodiment of the assembly, illustrated by way of non-limiting example in the accompanying drawings, in which:
- Fig. 1: shows a cross-section of a top view of a cut part of a plate with a stirrup arranged at the plate, and a guide pin projecting through the stirrup as a guide for a spring element arranged in a gap between a keybar and the stirrup;
- Fig. 2: shows a cross-section of a side view of the assembly similar to Fig. 1;
- Fig. 3: shows a cross-section of a top view of a part of a cut plate with a stirrup arranged at the plate, and a guide pin projecting through the stirrup as a guide for a spring element arranged in a notch of a keybar adjacent to a gap between the keybar and the stirrup;
- Fig. 4: shows a cross-section of a side view of the assembly similar to Fig. 3;
- Fig. 5: shows a cross-section of a side view of a cut part of a plate with a stirrup arranged at the plate, and a guide pin projecting through the stirrup as a guide for a spring element arranged between a plate of the plate and a counter plate, whereas the spring force to compensate thermic expansions of the plate is transferred via the counter plate and the guide pin in the direction of the keybar;
- Fig. 6: shows a top view of an assembly similar to Fig. 5;
- Fig. 7: shows a cross-section of a side view of a part of a cut plate with a stirrup arranged at the plate, and a screw projecting through a plate as a guide for a spring element arranged between the plate and a keybar, whereas the spring element is pressed to compensate thermic expansions of a stator core connected to the keybar;
- Fig. 8: shows a top view of an assembly similar to Fig. 7;
- Fig. 9: shows a cross-section of a side view of a different example of the assembly with a keybar and a stirrup, which is mounted to the plate, and with a damper element which is mounted to the stirrup, the damper element damps the vibrations in the cavity between the keybar and the damper element;
- Fig. 10: shows a top view of the example according to Fig. 9;
- Fig. 11: shows a cross-section of a side view of a stator core, a plates, a keybar connected with the stator core, the plates connected with the stirrups housing guide pins which project to the keybar, to illustrate the assembly embedded in an electric machine;
- Fig. 12: shows a perspective partly cut view of an example of the invention similar to Figs. 1 and 2.

### DETAILED DESCRIPTION OF EXEMPLARY EMBODIMENTS

With reference to the figures, these show cross-sections of side views and top views of four examples of the invention, wherein the reference numerals designate identical or corresponding parts throughout the several views.

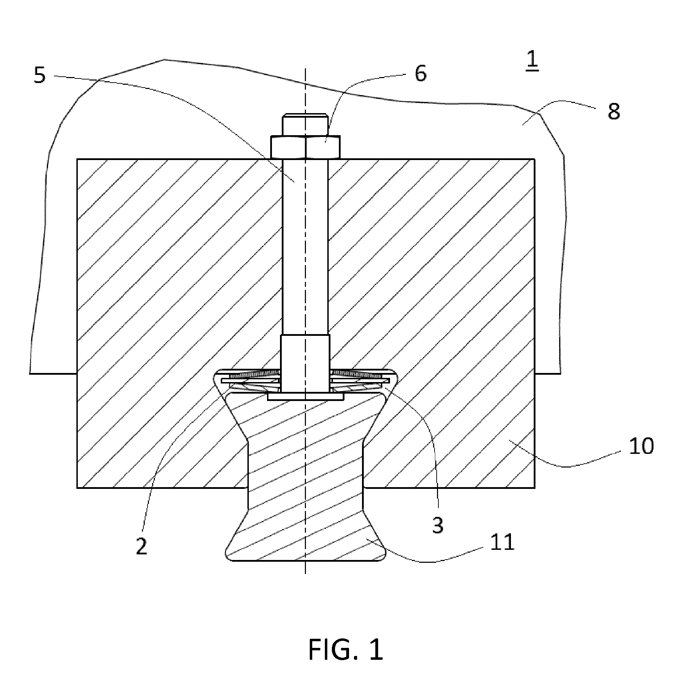

Fig. 1 shows a top view of a cross-section of an assembly 1 according to an example of the invention. Below is the direction to the electric machine, above is the direction to the outside of the electric machine to the stator housing. The assembly 1 is part of an electric machine for high power supply, especially a hydrogenerator or windgenerator generating high power commonly supplied to a public electric grid. The assembly 1 is mounted to a support element 8. The support element 8 can be a plate from metal projecting along a part of the inner face of the stator frame 13 or a ring projecting along the whole inner face of the stator frame 13. When the support element 8 is designed as a ring the support element 8 is connected to several stirrups 10 around the stator. The support element 8 is here integrated with the stator frame 13 and one-piece with the stator frame 13.

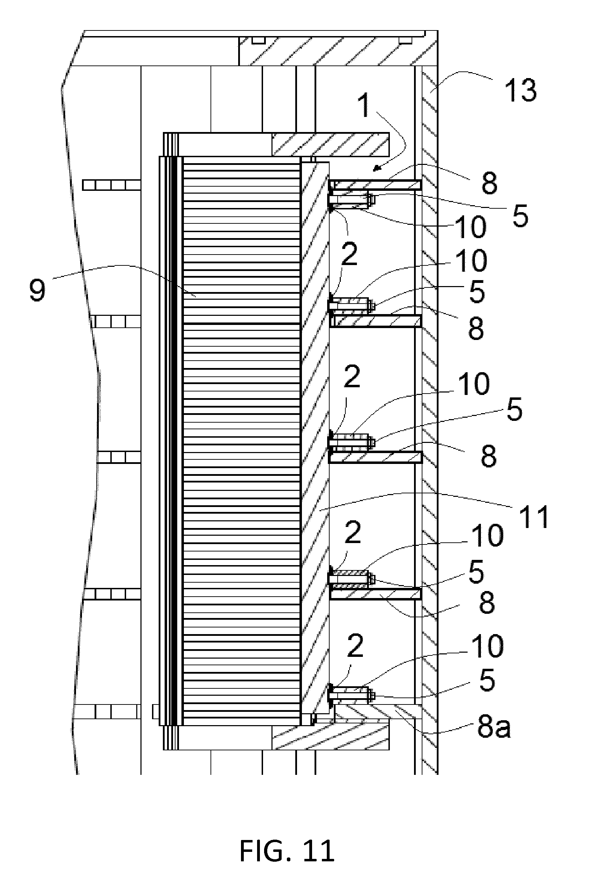

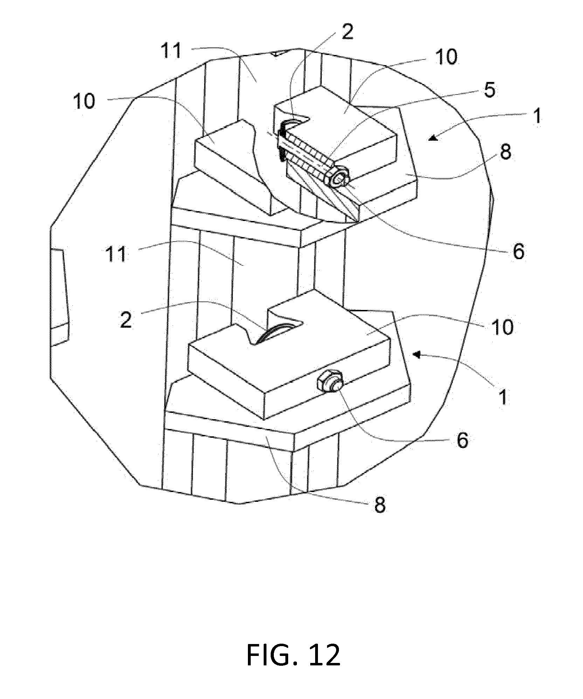

The support element 8 can have different shapes, for example rectangular or circular, in Fig. 1 a cut view is shown. The support element 8 is mounted to the housing of a stator of the electric machine. The housing of the stator is referred to here as stator frame 13. The stator usually has a length of up to several metres and a cylindrical shape. The position of the assembly 1 in the electric machine is described in more detail under Fig. 11. On the support element 8 in this view a stirrup 10 is arranged which has a rectangular shape and consists of a solid structure. The stirrup 10 is a strap to connect the stator core 9 via a keybar 11 and the support element 8 to the stator frame 13. The stirrup 10 can have a rectangular cross-section and contains a body with a slot and two clamping arms suitable to be clamped to the keybar 11. The keybar 11 is an elongated rectangular component from metal or metal bar which fulfils the function of a wedge to connect the stator core 9 to the stirrup 10. The keybar 11 can have different shapes, in the examples the keybar 11 has the shape of a rectangular bar with extended end portions, i.e. a dove-tail shape, as can be seen in Fig. 1. The upper extended end portion of the keybar 11 is inserted into a corresponding opening of the stirrup 10. The keybar 11 projects along the lower face in the corresponding slot of the stator core 9. A multitude of stirrups 10 are clamped at the keybar 11 as will be described under Figs. 11 and 12. At one end the keybar 11 is connected to a guide pin 5 which straightly projects through the stirrup 10 in this example. At the bottom side in this view the keybar 11 is inserted into a slot of the stator core 9, especially the keybar 11 is engaged with the stator core 9. The keybar 11 is connected to the guide pin 5 which projects completely through the stirrup 10 and protrude each at one side as can be seen in Fig. 1. The guide pin 5 is finished with a nut 6 which abuts back face at the edge of the stirrup 10. The guide pin 5 can comprise a projection at one end which serves to bias the spring element 2. Between the connection of the keybar 11 and the stirrup 10 a space is arranged when the machine is not operated which space serves to include the spring element 2 or damper element 22. This space is referred to as spring deflection 7 in the following. Although this term refers to a deflection of a spring element 2 it is to be understood that also the deflection of a damper element 22 falls under this term. The spring deflection 7 in this example is identical to a gap 3. The gap 3 is adjusted to furnish space for the stator core 13 when the machine is in operation and heating up. The gap 3 thus provides a tolerance for the involved parts, especially the expansion of the laminated sheets of the stator core 13 in operation. In a cold condition during the time the electric machine starts operating and has not reached the operating temperature a spring element 2 avoids the keybar 11 to slip along the stirrup 10. In this cold condition the spring element 2 provides the radial contact between the stirrup 10 and the keybar 11. With other words the spring element 2 supports the keybar 11 and the stirrup 10 connected to the support element 8 connected to the stator frame 13. In a warm or heated condition in operation of the electric machine the spring element 2 is pressed and flat and there is a full contact between the stirrup 10 and the keybar 11. Then, the force can be transmitted directly from the keybar 11 to the stirrup 10. The spring element 2 can be realized as a coil spring, a helical torsion spring, a leaf spring package, a torsion bar spring, a ring spring, a plate spring, a rubber spring, or a leaf spring. Further, the spring element 2 can be replaced by a damper element 22 in another example. Supporting the keybar 11 and the support element 8 connected to the stator frame 13 prevents vibrations to occur at starting during cold operation. In operation the produced heat generates an expansion of the stator material. In particular the stator core 9 below the keybar 11 in this view expands and exerts a force to the keybar 11 directed upwards in the perspective shown in Fig. 1. As a result the width of the gap 3 reduces. In the perspective of Fig. 1 below under the keybar 11 the stator core 9 is arranged, this is the inside of the stator. Correspondingly, above the keybar 11 the support element 8 is arranged, illustrated in a cut view, which is near the outside of the stator. The spring element 2 is clamped between the stirrup 10 and the keybar 11 and can be biased in an example. By the reduction of the width of the gap 3 the spring element 2 is pressed and correspondingly reduced in size in a vertical direction as shown in Fig. 1, which is the radial direction of the stator core 9.

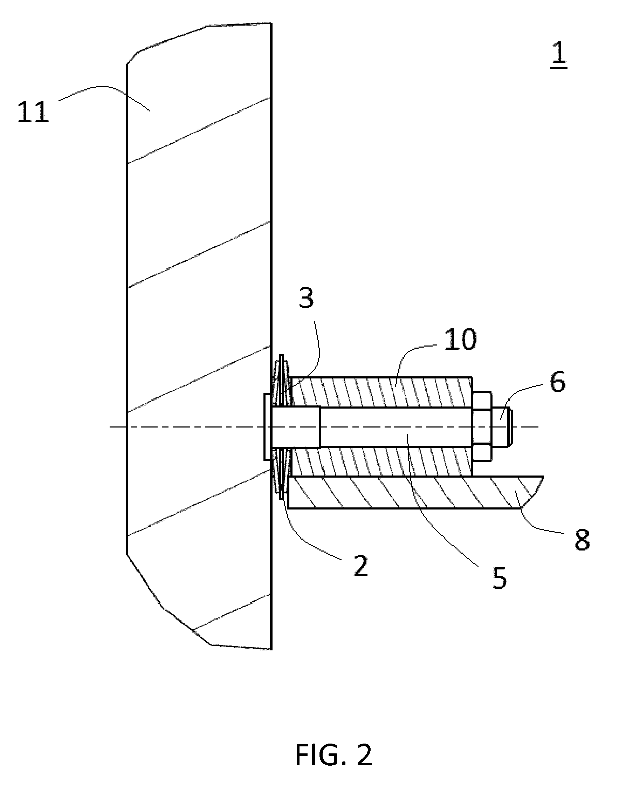

Fig. 2 shows a cross-section of a side view of an assembly 1 similar to Fig. 1. At the left the keybar 11 projects vertically in this view. The spring element 2 abuts the keybar 11 and is arranged between the keybar 11 at the left and the stirrup 10 at the right. The stirrup 10 houses most parts of the guide pin 5 which is mounted at the support element 8 and projects with the stirrup 10 perpendicularly from the keybar 11. At the right end the guide pin 5 has a screw head 6 which clamps the guide pin 5 and the spring element 2 to the keybar 11. A specific force is exterted to the stirrup 10 and the spring element 2 to stress the spring element 2, a pull force to assemble the components and a release of force for operation. Again, in operation when the machine heats up, the gap 3 between the keybar 11 and the stirrup 10 in which the spring element 2 is positioned is reduced by thermic expansion of the parts, especially the stator core 9 which contains a plurality of laminated sheets. The circularity of the overall shape of the stator core 9 however must be safeguarded in very small tolerances. Thus, the thermic expansion of the stator core sheets are compensated. The spring element 2 is further stressed and pressed in operation mode when the width of the gap 3 reduces.

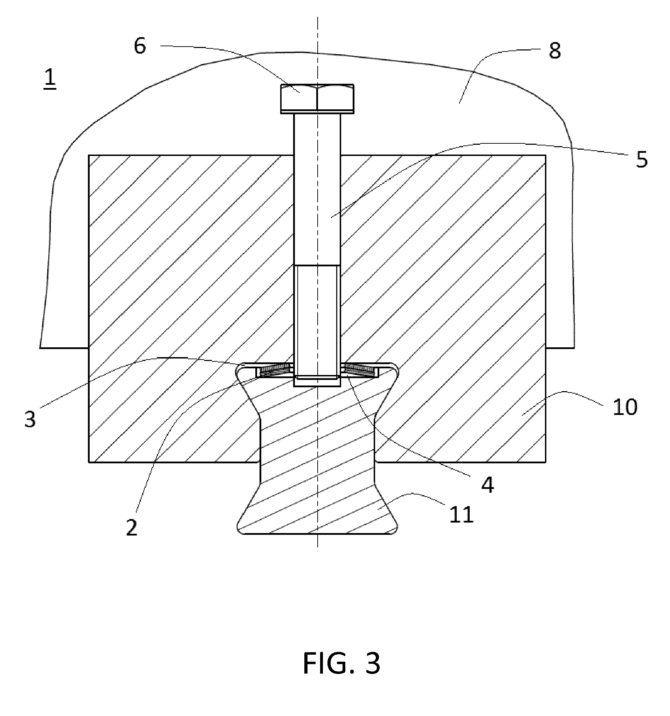

Fig. 3 shows a cross-section of a top view of a further example of the assembly 1 of the invention. The view is similar to the view of Fig. 1. A cut part of the support element 8 connected to the stator frame 13 of an electric machine is shown. On the top of the support element 8 a stirrup 10 is placed which encompasses the guide pin 5 which is designed as a screw 12 here. The function of the screw 12 is essentially to guide the parts. In one example the screw 12 has an additional function. The material of the screw 12 and its thread is flexible such that the shift due to the thermic expansion is compensated by the material and the screw 12 is the damper element 22 here. The screw thus does not prevent the keybar 11 to move in this example. A spring element 2 or an additional damper element 22 is not necessary in this specific example. The screw 12 comprises a nut 6 to adjust the force exerted and bias the spring element 2. In the example shown in Fig. 3 the keybar 11 has a nut slot 4 at one end facet. This nut slot 4 is designed to accommodate the spring element 2. The spring element 2 is here placed and supported by the walls of the nut slot 4 in the keybar 11 in the contrary to the example according to Fig. 1. The spring deflection 7 in this example is again identical to a gap 3. The spring element 2 fulfils the same function of filling the gap 3 and to avoid vibrations of the stator in cold operation, i.e. in an operation mode when the material is not heated due to operation and therefore is not expanded. In operation mode the gap size of the gap 3 is reduced and the spring element 2 is pressed together correspondingly.

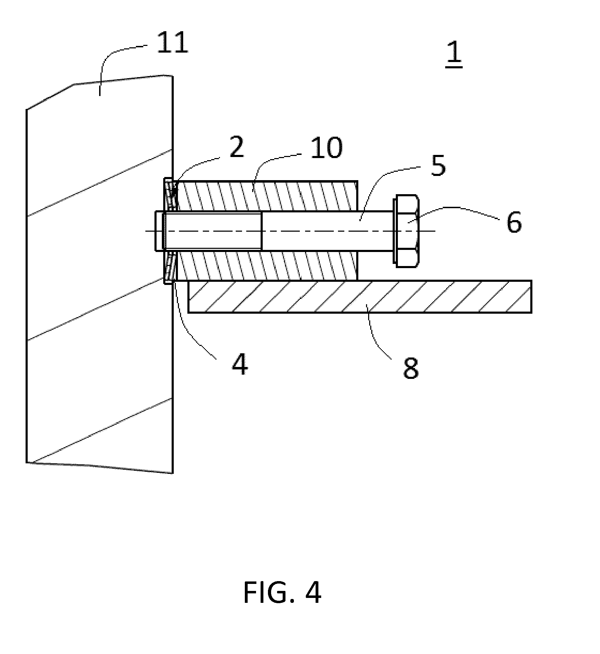

Fig. 4 shows a cross-section of a side view of the assembly 1 similar to Fig. 3. Illustrated is the position of a part of the keybar 11 at the left, the attached guide pin 5, designed as a screw, the stirrup 10 surrounding the screw, and the support element 8 below the stirrup 10. The stirrup 10 projects along the support element 8, and the facets of the support element 8 and the stirrup 10 are fixed to each other. The stator core 9 presses against the spring element 2 via the keybar 11 at one side while the support element 8 presses against the spring element 2 via the stirrup 10 from the other side, as is shown in Fig. 4. As described under Fig. 3 a nut slot 4 is designed in the keybar 11 to house the spring element 2.

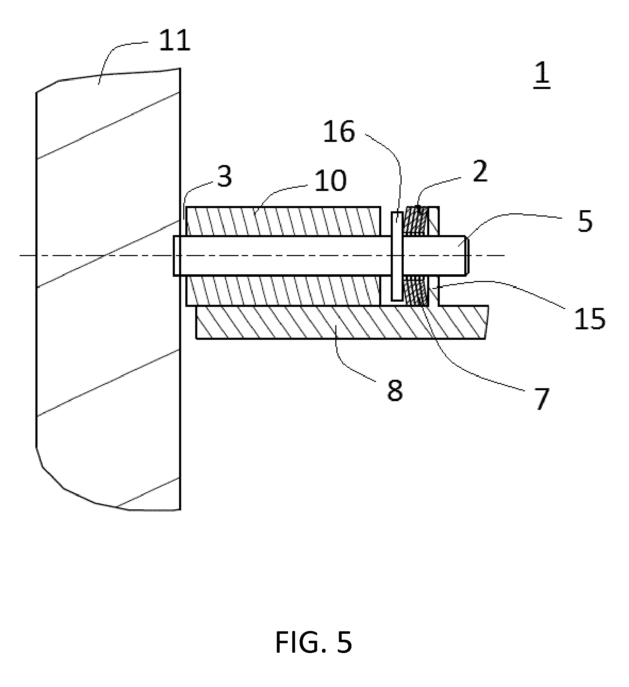

Fig. 5 shows a cross-section of a side view of an assembly 1 with a different structure. Shown is the support element 8 connected to the stirrup 10 which is clamped to the stator core 9 via the keybar 11. The structure of the assembly 1 is different to the other examples, as the spring element 2 is positioned in a spring deflection 7 which is in this example constituted by a second plate 15 and a counter plate 16. The spring element 2 is connected to the second plate 15 and to the counter plate 16. The spring deflection 7 is not identical to the gap 3 in this example according to Fig. 5. The spring deflection 7 is arranged at the right side from the stirrup 10, not between the stirrup 10 and the keybar 11. This configuration allows the spring element 2 to be designed bigger than when placed in the small gap 3. In cold operation mode, when the machine starts, the gap 3 between the stirrup 10 and the keybar 11 is open, the spring element 2 is biased in a way to support the counter plate 16 and the guide pin 5 so that the gap 3 has a specific width. By this measure unwished vibrations of the stator are diminished. Then, the biased spring element 2 supported by the fixed second plate 15 at the right pushes against the counter plate 16 which is mounted at the guide pin 5. When the material heats up the stator core 9 connected to the keybar 11 expands, the keybar 11 is shifted to the right. The width of the spring deflection 7 and the width of the gap 3 are reduced. A movement of the counter plate 16 at the left is translated to an equivalent movement of the spring element 2, whereas the second plate 15 is fixed and is not moved. The effect of this is that the material is allowed to expand in operation mode, no further stress is established to the parts involved. In operation mode when the machine reaches its operation temperature the gap 3 is closed in this example. Further, for the sake of illustration the gap 3 and the spring deflection 7 are shown enlarged compared to the other components, the actual thermic expansion is in the range of fractions up to several millimeters. In this example in particular a helical spring is preferred as spring element 2.

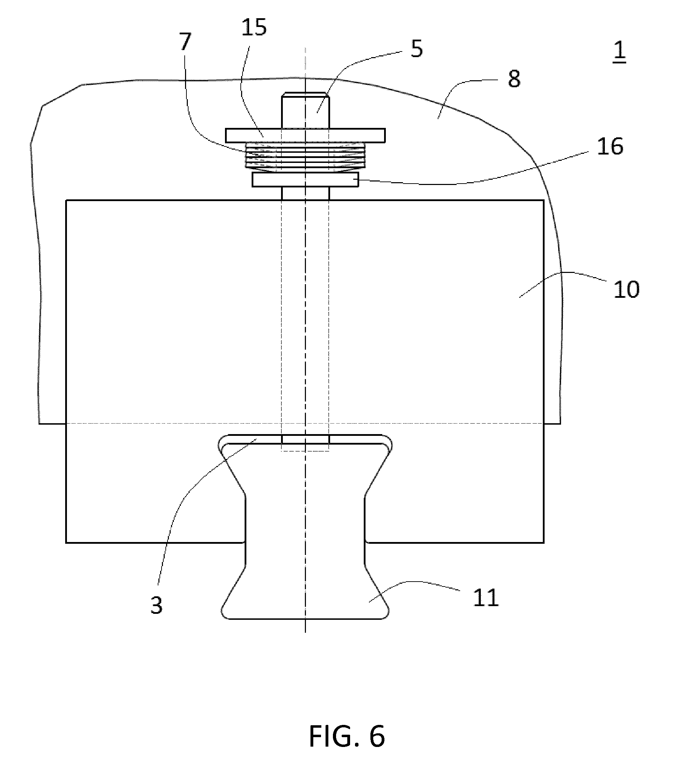

Fig. 6 shows the assembly 1 of Fig. 5 in a cross-section of a top view and shifted by 90° to the left. In this perspective the inside of the stator core 9 is situated below while the outer side of the electric machine is situated above. The function of the assembly 1 in an electric machine is as described above under Fig. 5.

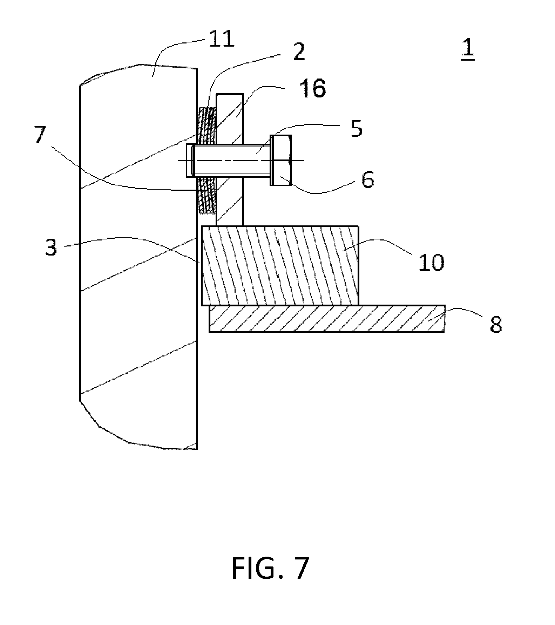

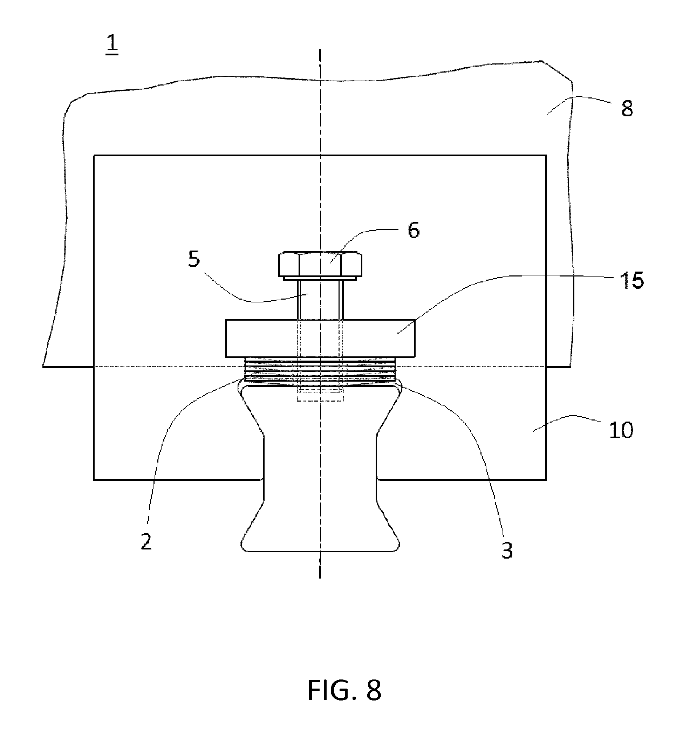

Fig. 7 shows a cross-section of a side view of a further example of the assembly 1 according to the invention. Here, the stirrup 10 does not surround the guide pin 5 but the stirrup 10 is arranged below the guide pin 5. As in all examples the stirrup 10 is attached to the support element 8. The gap 3 between the stirrup 10 and the keybar 11 is shown in Figs. 7 and 8. The spring deflection 7 serves for accommodation of the spring element 2 and is arranged above the gap 3 in this view. At the stirrup 10 the counter plate 16 is mounted perpendicularly to the stirrup 10 and essentially parallel to the keybar 11 which counter plate 16 encloses the guide pin 5. In the spring deflection 7 between the counter plate 16 and the keybar 11 the spring element 2 is arranged which is guided by the guide pin 5. When the material of the machine is cold before starting the machine the spring element 2 exerts a specific stress against the keybar 11 and the counter plate 16 which is sufficient to divide the keybar 11 from the stirrup 10 to create the gap 3. When the force exerted by the expansion of the stator core 9 enhances which is transferred by the keybar 11 the spring element 2 in the spring deflection 7 is pressed together and the width of the spring deflection 7 as well as the width of the gap 3 is reduced to zero. Fig. 8 shows a cross-section of a top view of the example according to Fig. 7 designed with a spring element 2.

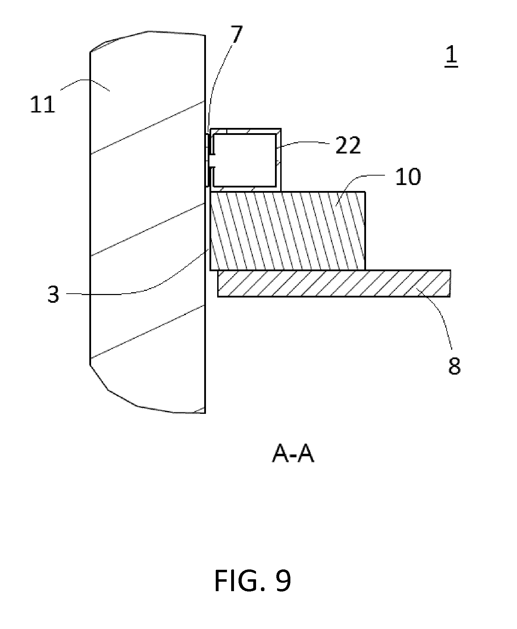

More preferred than a spring element 2 for another example according to Fig. 9 is a damper element 22. Again, the stirrup 10 is connected to the support element 8.

Fig. 9 shows a cross-section of a side view of a different example of the assembly 1 with a damper element 22 assembled to the assembly 1. Similar to the examples described above the keybar 11 is arranged at the left. The keybar 11 is again a wedge with a dove-tail shape. The keybar 11 is securely placed at the stator core 9, this means in the shown perspective the stator core 9 of the electric machine is placed left from the keybar 11. Adjacent and right from to the keybar 11 the stirrup 10 is arranged which is designed as described under the examples above. At the lower facet of the stirrup 10 a facet of the support element 8 is mounted. The support element 8 is again mounted to the stator frame 13. In an alternative structure an additional element is mounted between the stirrup 10 and the keybar 11. The assembly 1 therefore provides a connection structure between the stator core 9 at the left and the stator frame 13 at the right. In this specific example of the invention a side facet of the damper element 22 is connected to the stirrup 10. The damper element 22 can be designed as a mechanical or a hydraulic damper element 22. The damper element 22 is a mechanical damper element 22 or a hydraulic damper element 22. The damper element 22 damps the vibrations which are essentially caused by the tolerances designed as a counter measure against the thermic expansions. The mechanical damper element 22 comprises a multitude of stacked leaf springs. The damping effect is essentially caused by bending and friction between the several leaf springs. The alternative hydraulic damper element 22 comprises a piston in an oil filled cylinder and a piston rod moving the piston in the cylinder. The oil filling causes a mechanical resistance at the moving piston. The cylinder of the hydraulic damper element 22 is connected to the stirrup 10 and the piston is connected to the keybar 11 in this example of Fig. 9 instead of the spring element 2. The hydraulic damper element 22 within the spring deflection 7 is adjusted to guarantee a gap 3 in cold operation when the machine is starting and a closing of the gap 3 in hot operation when the machine reaches its operation temperature and the material is expanded. The damper element 22 contacts the keybar 11. The damper element 22 replaces the spring element 2 in this example. In case of thermic expansion of the stator core 9 the displacement corresponding to the thermic expansion is transferred to the damper element 22 which compensates for this displacement. The damper element 22 comprises a housing which is essentially designed as a cylinder from metal and a piston therein. The damper element 22 can be filled with specific oil material or a gas. The piston commonly projects axially through the damper element 22 and is finished outside the housing or cylinder with a damper plate perpendicularly arranged to the piston and the cylinder. The damper plate contacts the keybar 11 at the whole size of its outer facet within the spring deflection 7 between the damper element 22 and the keybar 11. The width of the gap 3 as well as the spring deflection 7 is reduced in the hot operation mode. In the hot operation the stator core 9 pushes to the right direction via the keybar 11 which pushing force is transferred to the damper element 22. This is the radial direction of the stator core 9 as shown here, the expansion is directed radially. The cylinder bore axis runs parallel to the keybar 11. The damper element 22 is calibrated to absorb this force such that the piston and the connected damper plate are pushed together with the housing or cylinder of the damper element 22 and the width of the spring deflection 7 reduces in the horizontal direction in the perspective of Fig. 9. Also, the width of the gap 3 reduces up to zero as the stirrup 10 and the damper element 22 are securely connected. Based on these functions of the assembly 1 vibrations of the machine can be minimized, especially by damping the movements of the parts forming the gap 3 manufactured as a tolerance to adjust for the thermic expansion as described above.

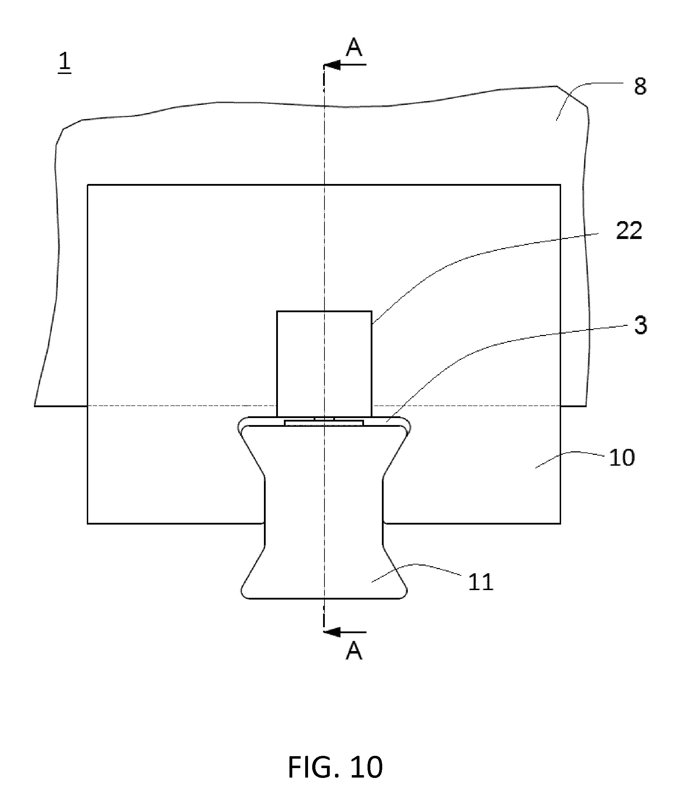

Fig. 10 shows a cross-section of a top view of the example corresponding to Fig. 9.

Fig. 11 shows a cross-section of a side view of a part of the stator core 9 of a stator of an electric machine. The stator core 9 is housed in the stator frame 13 which is essentially the housing of the stator. Shown is the right end of the stator core 9 with stator frame 13. The sheets forming the stator core 9 are stacked as is illustrated in Fig. 11, the rotation axis of the hydrogenerator is perpendicular to the image plane and the lamination sheets. Thus, the bore diameter of the stator core 9 and stator frame 13 is directed to the left in the shown perspective. In Fig. 11 five assemblies 1 are shown in the cross-section, for sake of lucidity only the top assembly 1 has a reference number, further assemblies 1 are applied to the electric machine around the stator core 9. Each assembly 1 can be designed as described in the examples above. From the cut view of the assembly 1 it can be seen that five support elements 8 are mounted to the stator frame 13, a different number of support elements 8 can be freely chosen and designed.

Fig. 12 shows a perspective partly cut view of an example of the invention with two assemblies 1 similar to Figs. 1 and 2. Shown is a cut part of the keybar 11 and two stirrups 10 clamped partly around the keybar 11. The two stirrups 10 each enclose a guide pin 5, whereas the stirrup 10 shown cut illustrates the guide pin 5 projecting through the stirrup 10. Both stirrups 10 are connected each to a support element 8, whereas the support element 8 above is shown cut and is a plate in this example. Visible are also the spring elements 2 between the keybar 11 and the stirrup 10 as described above.

While the invention has been described in detail with reference to exemplary embodiments thereof, it will be apparent to one skilled in the art that various changes can be made, and equivalents employed, without departing from the scope of the invention. The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein.

### REFERENCE NUMBERS

- 1: assembly
- 2: spring element
- 3: expansion gap
- 4: spring slot
- 5: guide pin
- 6: screw head or nut
- 7: spring deflection
- 8: support element
- 9: stator core
- 10: stirrup
- 11: keybar
- 12: screw
- 13: stator frame
- 15: second plate
- 16: counter plate
- 22: damper element
- 55: projection

## Claims

1. Assembly (1) for the compensation of thermic expansion in an electric machine with a stirrup (10) connected to a support element (8) mounted to a stator frame (13), the stirrup (10) is suspended to the stator frame (13) via the support element (8) and clamped to a keybar (11) and projects with the support element (8) perpendicular to the keybar (11), whereas a spring element (2) or a damper element (22) are pressed and reduce width when a gap (3) between the stirrup (10) and the keybar (11) reduces size due to thermic expansion.

2. Assembly (1) according to claim 1, **characterized in that** the spring element (2) is arranged in a spring deflection (7).

3. Assembly (1) according to claim 2, **characterized in that** the space of the spring deflection (7) comprises the space of the gap (3) between the stirrup (10) and the keybar (11).

4. Assembly (1) according to claim 2, **characterized in that** the spring deflection (7) is constituted by a plate (15) and a counter plate (16) both arranged around a guide pin (5) to guide the spring element (2) or the damper element (22).

5. Assembly (1) according to claim 4, **characterized in that** the guide pin (5) is attached to the keybar (11) and projects through the stirrup (10) to the keybar (11).

6. Assembly (1) according to claim 5, **characterized in that** the guide pin (5) is threaded and a screw head (13) at the guide pin (5) is rotatable to bias the spring element (2) or the damper element (22) in the gap (3).

7. Assembly (1) according to claim 5, **characterized in that** the guide pin (5) is threaded and contains a flexible material to compensate for thermic expansions, the damper element (22) is the threaded guide pin (5).

8. Assembly (1) according to claim 4, **characterized in that** the guide pin (5) comprises a projection to bias the spring element (2).

9. Assembly (1) according to claim 1, **characterized in that** the spring element (2) is a coil spring, a helical torsion spring, a leaf spring package, a torsion bar spring, a ring spring, a plate spring, a rubber spring, or a leaf spring.

10. Assembly (1) according to claim 1, **characterized in that** the damper element (22) is a mechanical damper element (22) to reduce vibrations until thermal expansion closes the gap (3).

11. Assembly (1) according to claim 1, **characterized in that** the damper element (22) is a hydraulic damper element (22) or a pneumatic damper element (22) to reduce vibrations until thermal expansion closes the gap (3).

12. Use of an assembly (1) according to claim 1.
